# EUROPÄISCHE PATENTSCHRIFT

(11) **EP 3 094 678 B1**
(45) Veröffentlichungstag und Bekanntmachung des Hinweises auf die Patenterteilung: **22.11.2017**
(21) Anmeldenummer: 15701718.7
(22) Anmeldetag: 16.01.2015
(51) Int. Cl.: C08K 5/053, C08K 5/09, C08K 5/092, C09J 103/04, C09J 103/08, C08L 3/04

(54) **FLÜSSIGKLEBER AUF STÄRKEBASIS**
STARCH BASED LIQUID ADHESIVE
ADHÉSIF LIQUIDE À BASE D'AMIDON

(30) Priorität: 16.01.2014 EP 14151439
(43) Veröffentlichungstag der Anmeldung: 23.11.2016
(73) Patentinhaber: Henkel AG & Co. KGaA, 40589 Düsseldorf (DE)
(72) Erfinder: SCHRIEFERS, Mathias, 41199 Mönchengladbach (DE); MAIER, Wolfgang, 40721 Hilden (DE); ZICKUHR, Ivonne, 41352 Korschenbroich (DE); HELLWIG, Nils, 47800 Krefeld (DE)
(86) Internationale Anmeldenummer: PCT/EP2015/050770
(87) Internationale Veröffentlichungsnummer: WO 2015/107149

(56) Entgegenhaltungen:
- WO-A1-2005/033243
- DE-A1- 19 908 560
- Dr. Roland Lentz: "Tecnopedia - Naturwissenschaft und Technik im Unterricht", , 1. Januar 2010 (2010-01-01), XP055104282, Gefunden im Internet: URL:http://www.tecnopedia.de/index.php?id= 119894079436354&experimentId=1639696406708 73 [gefunden am 2014-02-25]

## Beschreibung

Die vorliegende Erfindung betrifft einen wasserbasierten Flüssigkleber und seine Verwendung zur stoffschlüssigen Verbindung von Kunststoffen, Metallen und offenporigen und/oder saugenden Materialien, beispielsweise von Holz, Papier, synthetischer Wolle, Baumwolle, Filz und/oder Kork. Der Flüssigkleber enthält Stärkederivate sowie ein Agens zur Wasserretention ausgewählt aus Mono-, Di- und/oder Trisacchariden und/oder Zuckeralkoholen, wobei der Flüssigkleber einen sauren pH-Wert aufweist.

Hinsichtlich der Verklebung unterschiedlichster Materialien mit einem universell einsetzbaren Kleber für den Alltagsgebrauch besteht ein umfangreicher Stand der Technik. Jüngere Entwicklungen zielen dabei darauf ab, flüssige physikalisch abbindende Klebstoffrezepturen anzubieten, die keine gesundheitsschädlichen Verbindungen an die Raumluft abgegeben und im Wesentlichen lösemittelfrei sind. Unter dem Gesichtspunkt eines Ressourcen schonenden und damit ökonomischen Einsatzes von Rohstoffen einerseits und der gesteigerten Nachfrage der Verbraucher nach möglichst klimafreundlichen, also idealerweise CO₂-neutralen, Produkten andererseits besteht ein Bedarf an Klebstoffrezepturen für den Alltagsgebrauch, die im Wesentlichen auf Basis nachwachsender Rohstoffe formuliert werden können. Hierzu offenbart die DE 100 03 642 A1 einen Klebstoff, der sich aus gesundheitlich unbedenklichen Verbindungen zusammensetzt und damit für die Verwendung auch durch Kinder gut geeignet ist. Der dort beschriebene Klebstoff enthält im Wesentlichen Stärkederivate, Zucker und Wasser. Gemäß der DE 100 03 642 A1 ist Dextrin als säurekatalysiertes Abbauprodukt der Stärke bevorzugt. Zur verbesserten Wasserlöslichkeit der Feststoffbestandteile enthält der Klebstoff eine Menge an Natriumhydroxid.

Die Aufgabe der vorliegenden Erfindung besteht darin, einen im Wesentlichen aus nachwachsenden Rohstoffen bestehenden, wasser- und stärkebasierten Kleber zu formulieren, der bei 20 °C flüssig und in der Lage ist, unterschiedlichste Substrate stoffschlüssig zu verbinden. Unmittelbar nach dem erstmaligen Verbinden zweier Substrate soll die über den Kleber hergestellte stoffschlüssige Verbindung wieder gelöst werden können, so dass eine Korrektur der relativen Lage der zu verbindenden Substrate gut möglich ist. Insbesondere ist gewünscht, dass der Kleber geeignet ist, saugfähige Materialien wie Papier, Pappe, Holz, Filz, Baumwolle, synthetische Textilfasern oder Kork mit für den Alltagsgebrauch hinreichender Stoffschlüssigkeit zu verbinden. Des Weiteren soll der Kleber nur im geringen Maße zur biologischen (enzymatischen) und chemischen Degradation, beispielsweise zur nichtenzymatischen Bräunung, neigen. Eine solche Degradation kann eine allmähliche Verschlechterung der Klebeeigenschaften durch Lagerung bedingen. Darüber hinaus geht mit der Degradation eine farbliche Veränderung des Flüssigklebers einher, die beim Verbraucher nur auf wenig Akzeptanz trifft, da er unweigerlich eine nachteilige Produktveränderung unterstellt. Zusätzlich ist gewünscht, dass der Kleber eine gute Auswaschbarkeit mit wasserbasierten Reinigern, insbesondere aus Textilien, bei niedrigen Temperaturen aufweist.

Überraschenderweise hat sich gezeigt, dass durch Einstellen eines sauren pH-Wertes der Kleberezeptur wasser- und stärkebasierte Flüssigkleber bereitgestellt werden können, die weder chemisch noch biologisch zur Degradation neigen und daher ihre guten Klebeeigenschaften über einen langen Zeitraum beibehalten. Zudem lässt sich die sauer eingestellte Rezeptur wasser- und stärkebasierter Flüssigkleber nach dem Abbinden aus Textilien hervorragend auswaschen.

Die Aufgabe wird daher vorliegend gelöst mittels der Bereitstellung eines wasserbasierten Flüssigklebers mit einem pH-Wert oberhalb von 3 und unterhalb von 6 enthaltend
a) zumindest 15 Gew.-% an ein oder mehreren Stärkederivaten ausgewählt aus Stärkeethern;
b) ein oder mehrere Mono-, Di- oder Trisaccharide oder Zuckeralkohole mit einem Gesamtanteil von nicht mehr als 30 Gew.-%, und
c) zumindest eine Säure mit einem pK_{S1}-Wert für den ersten Deprotonierungsschritt im Bereich von 2,5 bis 6,0, die ausgewählt ist aus mehrwertigen organischen Carbonsäuren.

Ein Flüssigkleber liegt im Sinne der vorliegenden Erfindung dann vor, wenn die Klebemasse bei 20 °C formunbeständig ist bzw. eine dynamische Viskosität von weniger als 35.000 mPas bei 30 °C, vorzugsweise von weniger als 20.000 mPas bei 30 °C, aufweist.

Der erste Deprotonierungsschritt der Säure bezeichnet erfindungsgemäß die Protolysereaktion einer freien Säure unter Abspaltung nur eines Protons. Als erfindungsgemäßer pK_{S1}-Wert zu dieser Protolysereaktion gilt der unter Standardbedingungen "SATP" (p = 1,013bar, T = 25 °C, c° = 1 mol dm⁻³) bestimmte Wert.

Der pH-Wert des Flüssigklebers entspricht seinem negativen dekadischen Logarithmus der Aktivität der Hydronium-Ionen potentiometrisch bestimmt mittels ionenselektiver Glaselektrode bei einer Temperatur des Flüssigklebers von 25 °C.

Stärkederivate gemäß vorliegender Erfindung sind alle aus dem nativen Stärkekorn unmittelbar durch physikalischen Aufschluss gewonnenen oder mittelbar über chemischen Aufschluss und Derivatisierung erhältlichen Polysaccharide. Ein chemischer Aufschluss bewirkt dabei einen Kettenabbau und liefert daher Polysaccharide mit geringerer Molmasse. Ein solcher Aufschluss kann beispielweise oxidativ mit Hilfe von Wasserstoffperoxid vorgenommen werden. Chemisch aufgeschlossene native Stärke weist gegenüber der physikalisch aufgeschlossenen Stärke eine verbesserte Wasserlöslichkeit auf und ist daher in einem erfindungsgemäßen wasserbasierten Flüssigkleber bevorzugt.

In Frage kommen für die Gewinnung der Stärkederivate prinzipiell alle Arten von nativen Stärkekörnern, also beispielsweise Getreidestärken, Knollen- bzw. Wurzelstärken und Leguminosestärken. Wegen ihrer hohen Stärkegehalte sind Reis, Kartoffel, Maniok, Gerste, Sorghum, Triticale, Weizen, Roggen, Süßkartoffel, Mais oder Erbse bevorzugte pflanzliche Quellen der Stärkederivate gemäß vorliegender Erfindung.

Für eine gute Beständigkeit gegenüber chemischer Degradation, hohe Wasserlöslichkeit und guter Klebkraft des erfindungsgemäßen Flüssigklebers ist die Verwendung von zumindest teilweise veretherten Stärken, die im Folgenden als Stärkeether bezeichnet werden, erfindungsgemäß vorgesehen.

Stärkeether weisen gemäß vorliegender Erfindung die chemisch strukturellen Einheiten von Kondensationsprodukten zwischen den Hydroxygruppen der Anhydroglucose-Einheiten von Stärkemolekülen und Hydroxyl-Gruppen von Alkoholen und Carbonsäuren auf. Bevorzugte Vertreter dieser Stärkederivate in einem erfindungsgemäßen Flüssigkleber sind Hydroxyalkylstärken, Carboxymethylstärken oder Hydroxyalkylcarboxymethylstärken als Mischether. Weiterhin ist bevorzugt, dass diese Stärkether in der aliphatischen Ethergruppe nicht mehr als 10 Kohlenstoffatome aufweisen, da anderenfalls ihre Wasserlöslichkeit deutlich reduziert wird und der gelöste Anteil solcher Stärkederivate im erfindungsgemäßen Flüssigkleber limitiert ist, so dass entweder Klebkraft oder Transluzenz eingebüßt wird. Einige wasserlösliche Stärkeethertypen werden daher bevorzugt eingesetzt. Hierzu gehören Hydroxyethyl- und Hydroxypropylstärke, sowie Carboxymethylstärke und Hydroxy-C2-C6-alkylcarboxymethylstärken, insbesondere Hydroxyethylcarboxymethylstärken, Hydroxypropylcarboxymethylstärken und/oder Hydroxyethylhydroxypropylcarboxymethylstärken.

Besonders bevorzugt eingesetzte Hydroxypropylcarboxymethylstärken werden durch Umsetzung einer Stärke mit Monochloressigsäure und/oder Monochloracetat und Propylenoxid erhalten, wobei Monochloressigsäure und/oder Monochloracetat einerseits und Propylenoxid andererseits in einem molaren Verhältnis von 10 : 1 bis 1 : 100, vorzugsweise von 5 : 1 bis 1 : 50, besonders bevorzugt von 5 : 1 bis 1 : 10, eingesetzt werden. In der Regel erfolgt die Umsetzung dabei in zwei Stufen, wobei die Stärke in einer ersten Stufe mit Monochloressigsäure und/oder Monochloracetat, und das entstehende Stärkederivat in einer zweiten Stufe dann mit Propylenoxid umgesetzt wird. In der ersten Stufe werden dabei Carboxymethylgruppen in das Stärkemolekül eingeführt. Durch Umsetzung mit dem Propylenoxid werden an diesen Carboxymethylgruppen und/oder noch vorhandenen freien Hydroxygruppen der Anhydroglucose-Einheiten der Stärkemoleküle Hydroxypropylgruppen bzw. hydroxyterminierte Polypropylenoxidketten angeknüpft. Das molare Verhältnis von Carboxymethylgruppen und Hydroxypropylgruppen im Stärkemolekül wird vom entsprechenden molaren Verhältnis der eingesetzten Edukte bestimmt. Werden hydroxyterminierte Polypropylenoxidketten aufgebaut, so wird unter dem molaren Gehalt an Hydroxypropylgruppen im Stärkemolekül die Summe des molaren Gehalts an endständigen Hydroxypropylgruppen und des molaren Gehalts an Propylenoxideinheiten in der Polypropylenoxidkette verstanden. Ein Mol einer Gruppe -CH₂CH(CH₃)-O-CH₂CH(CH₃)-OH entspricht daher beispielsweise zwei Mol Hydroxypropylgruppen im Stärkemolekül.

Für das Vorliegen guter Klebeigenschaften einerseits und einer Abbindungszeit andererseits, die zwar eine Korrektur der relativen Lage der mit einem erfindungsgemäßen Flüssigkleber verbundenen Substrate unmittelbar nach dem ersten gegenseitigen In-Kontakt-Bringen jedoch auch eine genügend schnelle Herstellung der stoffschlüssigen Verbindung erlaubt, ist es erforderlich, wenn der Anteil der Stärkederivate gemäß Komponente a) im Flüssigkleber zumindest 15 Gew. % beträgt, jedoch vorzugsweise nicht mehr als 50 Gew. %, besonders bevorzugt nicht mehr als 40 Gew. %.

Für die Klebeeigenschaften des erfindungsgemäßen Flüssigklebers ist es zudem vorteilhaft, wenn die Stärkederivate gemäß Komponente a) nicht zu stark chemisch oder enzymatisch aufgeschlossen und damit zu kurzkettigen Polymeren abgebaut vorliegen. Mit Rezepturen, deren Anteil an Stärkederivaten zu niedermolekular eingestellt ist, ist die Verklebung für viele Substrate nicht immer zufriedenstellend. Daher besitzen in einer bevorzugten Ausführungsform des Flüssigklebers 50% der organischen Bestandteile des Flüssigklebers eine Molmasse oberhalb von 10.000 g/mol, vorzugsweise oberhalb von 50.000 g/mol, jeweils als Peakflächenprozent abgeleitet aus der über Größenausschlusschromatographie mit konzentrationsabhängigem Detektor experimentell bestimmten und gegen Pullulan-Standards kalibrierten Molmassenverteilungskurve, wobei der Anteil der organischen Bestandteile mit einer Molmasse oberhalb von 10.000 g/mol vorzugsweise eine zahlenmittlere Molmasse von zumindest 40.000 g/mol, besonders bevorzugt von zumindest 60.000 g/mol, jedoch vorzugsweise von nicht mehr als 300.000 g/mol besitzt. Die experimentelle Meßmethodik zur Bestimmung der Molekulargewichtsverteilungskurve erfindungsgemäßer Flüssigkleber mittels Größenausschlusschromatographie ist im Beispielteil detailliert angegeben. Es ist insgesamt überraschend, dass die bevorzugten höhermolekularen Bestandteile in Form der Stärkederivate im erfindungsgemäßen, sauer eingestellten Flüssigkleber chemisch nicht degradieren und damit über einen längeren Zeitraum kein signifikanter niedermolekularer Anteil an Stärkederivaten aufgebaut wird.

Weiterhin entscheidend sowohl für das Abbindeverhalten als auch die Stabilität der Flüssigklebers an Luft, die darin bestehen soll, nicht in kürzester Zeit durch Wasserverlust abzubinden und sich so zu einer formstabilen Klebemasse umzuwandeln, ist die Anwesenheit von Verbindungen der Komponente b). So sorgen diese Verbindungen für eine hinreichende Wasserretention und gewährleisten, dass der Flüssigkleber über einen längeren Zeitraum an Luft, insofern er nicht als dünner, wenige Mikrometer dicker Film auf einem zu verklebenden Substrat aufgebracht ist, seine Eigenschaft, Flüssigkleber zu sein, behält. Umgekehrt verhindert die Komponente b) nicht, dass ein dünner, auf einem zu verklebenden Substrat aufgebracht Film des Flüssigklebers in der Lage ist, zügig abzubinden. Dies gilt insbesondere für zu verklebende Substrate, die aus einem saugenden Material wie Zellstoff bestehen, für die der erfindungsgemäße Flüssigkleber nur wenige Korrekturmöglichkeiten nach erstmaligen Zusammenbringen der zu verklebenden Substrate erlaubt, ohne dass die Klebewirkung nach wiederholtem Zusammenbringen verloren geht oder die verklebten Substrate nicht ohne deren Beschädigung wieder getrennt werden können. Für dieses ausgewogene Eigenschaftsprofil des Flüssigklebers ist erfindungsgemäß vorgesehen, dass der Gesamtanteil der Verbindungen ausgewählt aus Mono-, Di- oder Trisacchariden und Zuckeralkoholen gemäß Komponente b) im Flüssigkleber nicht mehr als 30 Gew.-%, vorzugsweise nicht mehr als 25 Gew.-% beträgt, jedoch vorzugsweise zumindest 5 Gew.-%, besonders bevorzugt zumindest 10 Gew.-%. Liegt der Anteil der Verbindungen gemäß Komponente b) unterhalb von 5 Gew.-% so ist die Wasserretention nicht hinreichend und der Flüssigkleber neigt dazu, bei Auftragung auf saugenden Materialien wie Papier eine Aufwellung des flächigen Substrates hervorzurufen. Umgekehrt sind Anteile oberhalb von 30 Gew.-% nicht erfindungsgemäß, da der Flüssigkleber dann beim Abbinden häufig kristalline Phasen ausbildet, so dass die Kohäsion verklebter Substrate herabgesetzt wird. Weiterhin ist für ein ausgewogenes Eigenschaftsprofil aus Abbindeverhalten und Klebekraft bevorzugt, wenn das Verhältnis der Massenanteile an Mono-, Di- oder Trisaccharide und der Zuckeralkohole gemäß Komponente b) zu Stärkederivaten gemäß Komponente a) im Bereich von 1 : 2 zu 1 : 1 liegt.

Besonders geeignete Vertreter der Verbindungen gemäß Komponente b) des erfindungsgemäßen Flüssigklebers sind Disaccharide, die wiederum in einer bevorzugten Ausführungsform ausgewählt sind aus Saccharose, Lactose, Maltose, Cellobiose, Melibiose, Gentiobiose und/oder Trehalose.

Bezüglich des pH-Wertes des erfindungsgemäßen Flüssigklebers konnte festgestellt werden, dass pH-Werte unterhalb von 3,0 zu einer chemischen Degradation der Stärkederivate unabhängig von der Art der zur Einstellung des pH-Wertes verwendeten Säure führen, so dass mit derartigen Kleberezepturen weder stabile Klebeeigenschaften erzielt werden können noch eine für die Akzeptanz der Verbraucher notwendige Farbstabilität gewährleistet werden kann. In einer bevorzugten Ausführungsform weist der Flüssigkleber daher einen pH-Wert von nicht unterhalb von 3,5 auf. Für eine gute Resistenz gegenüber biologischer Degradation ist es zudem notwendig, dass die Rezepturen sauer eingestellt sind. Insgesamt ist daher für die Bereitstellung von Flüssigklebern, die gegenüber chemischer und biologischer Degradation beständig sind, erfindungsgemäß vorgesehen, dass der Flüssigkleber einen pH-Wert unterhalb von 6, vorzugsweise unterhalb von 5, besonders bevorzugt unterhalb von 4,5 aufweist. In den erfindungsgemäßen und bevorzugten erfindungsgemäßen pH-Bereichen ist zudem eine hervorragende Auswaschbarkeit von abgebundenen Rückständen des Flüssigklebers aus Textilien auch bei niedrigen Temperaturen gewährleistet.

Der Einsatz der speziellen Säuren gemäß der Komponente c) im erfindungsgemäßen Flüssigklebers hat sich als erfindungswesentlich herausgestellt, da diese die Tendenz der Stärkederivate, chemischen zu degradieren, nahezu vollständig zu unterbinden vermögen. Daher ist die Säure gemäß Komponente c) erfindungsgemäß ausgewählt aus mehrwertigen organischen Carbonsäuren. In einer bevorzugten Ausführungsform des erfindungsgemäßen Flüssigklebers sind die mehrwertigen organischen Carbonsäuren der Komponente c) ausgewählt aus Carbonsäuren mit zwei bis fünf Carboxyl-Gruppen, besonders bevorzugt aus Zuckersäuren, Glutarsäure, Weinsäure oder Zitronensäure, insbesondere bevorzugt aus Zitronensäure, die zusätzlich verhindert, dass bei hohen Gehalten an Verbindungen der Komponente b) Kristallisation beim Abbinden des Flüssigklebers eintritt.

Es hat sich herausgestellt, dass der Anteil an Säuren gemäß Komponente c) sowie deren wasserlöslichen Salzen im erfindungsgemäßen Flüssigkleber vorzugsweise zumindest 1 Gew.-%, besonders bevorzugt zumindest 2 Gew.-% beträgt, jedoch vorzugsweise 10 Gew.-%, besonders bevorzugt 6 Gew.-% nicht überschreitet. Hierbei ist weiterhin bevorzugt, wenn das Verhältnis der Massenanteile an Säuren gemäß Komponente c) sowie deren wasserlöslichen Salzen zu Stärkederivaten gemäß Komponente a) im Bereich von 1 : 6 zu 1 : 10 liegt.

Zur Gewährleistung der Eigenschaft des Klebers der vorliegenden Erfindung flüssig zu sein, ist es vorteilhaft, wenn der Anteil an Wasser im Flüssigkleber zumindest 15 Gew.-%, vorzugsweise zumindest 30 Gew.-% beträgt.

Weiterhin zeichnet sich die Rezeptur des erfindungsgemäßen Flüssigklebers dadurch aus, dass weder für das In-Lösung-Bringen der Komponenten a) und b) noch für die Bereitstellung einer Flüssigphase ein anderes Lösemittel als Wasser notwendig ist. Daher ist der Anteil an organischen Lösemitteln mit einem Siedepunkt von weniger als 150 °C bei Standardbedingungen im erfindungsgemäßen Flüssigkleber vorzugsweise nicht größer als 10 Gew.-%, besonders bevorzugt nicht größer als 5 Gew.-%, insbesondere bevorzugt nicht größer als 1 Gew.-%.

Im erfindungsgemäßen Flüssigkleber können je nach Anwendung weitere Hilfsstoffe additiviert werden, die beispielsweise ausgewählt sind aus Konservierungsmitteln, Verdickungsmitteln, Duftstoffen, Füllstoffen und/oder Pigmenten, deren Anteil am Flüssigkleber vorzugsweise 10 Gew.-%, besonders bevorzugt 5 Gew.-%, insbesondere bevorzugt 2 Gew.-% nicht übersteigt, insbesondere um den Anspruch, eine Formulierung auf Basis nachwachsender Rohstoffe bereitzustellen, im Wesentlichen gerecht zu werden und zudem um die Transparenz des Flüssigklebers nicht zu beeinträchtigen. Verdickungsmittel sind organische oder anorganische Verbindungen, die homogen im Flüssigkleber gelöst sind und als solche mit anderen Komponenten des Flüssigklebers keine chemischen Reaktionen eingehen, jedoch eine Erhöhung der Viskosität herbeiführen. Beispielhaft seien hier Borax, Seifen, Tenside, Glycerin und/oder Propylenglykol als typische Verdickungsmittel genannt. Füllstoffe hingegen unterscheiden sich von Verdickungsmitteln dadurch, dass sie im Flüssigkleber dispergiert vorliegen. Pigmente wiederum unterscheiden sich von Füllstoffen dadurch, dass sie in der Lage sind, dem Flüssigkleber einen Farbeindruck zu vermitteln oder sichtbare optische Effekte durch Lichtreflektion, Phosphoreszenz oder Fluoreszenz hervorzurufen.

In einer besonders bevorzugten Ausführungsform ist der Flüssigkleber gemäß vorliegender Erfindung zusammengesetzt aus
a) 15-50 Gew.-%, vorzugsweise 20-40 Gew.-%, an Stärkederivaten;
b) 5-30 Gew.-%, vorzugsweise 10-25 Gew.-%, an Mono-, Di- und Trisacchariden sowie Zuckeralkoholen;
c) 1-10 Gew.-%, vorzugsweise 2-6 Gew.-%, an mehrwertigen organischen Carbonsäuren sowie deren wasserlöslichen Salzen;
d) zumindest 15 Gew.-%, vorzugsweise zumindest 30 Gew.-% an Wasser
e) nicht mehr als 10 Gew.-%, vorzugsweise nicht mehr als 5 Gew.-%, besonders bevorzugt nicht mehr als 2 Gew.-% an Hilfsstoffen ausgewählt aus Konservierungsmitteln, Verdickungsmitteln, Duftstoffen, Füllstoffen und/oder Pigmenten;
f) nicht mehr als 5 Gew.-%, vorzugsweise nicht mehr als 1 Gew.-%, an organischen Lösemitteln mit einem Siedepunkt von weniger als 150 °C bei Standardbedingungen,
g) nicht mehr als 10 Gew.-%, vorzugsweise nicht mehr als 5 Gew.-%, besonders bevorzugt nicht mehr als 1 Gew.-% an anderen Substanzen als den unter a)-f) genannten,
wobei der Flüssigkleber einen sauren pH-Wert oberhalb von 3,0 aufweist.

Der erfindungsgemäße Flüssigkleber eignet sich zur stoffschlüssigen Verbindung (Verklebung) einer Vielzahl unterschiedlicher Materialien, beispielsweise von Holz, Papier, synthetischer Wolle, Baumwolle, Filz, Kork, Kunststoffen wie Styropor und/oder Metallen, vorzugsweise von offenporigen und/oder saugenden Materialien, besonders bevorzugt von saugenden Materialien. Offenporige Materialien weisen bei einer Porosität von zumindest 0,2 definiert als Verhältnis von Hohlraumvolumen zu Gesamtvolumen eine Porenanzahldichte von zumindest 10 Poren pro Quadratzentimeter an ihrer zu verklebenden Oberfläche auf, wobei die längstmögliche Sehne der Porenöffnungen jeweils zumindest 10 µm beträgt. Die Anzahldichte und längste Dimension der Poren kann mittels Auflicht-Hellfeld-Mikroskopie bestimmt werden, bei der die Poren als dunkle Stellen sichtbar werden und als solche ausgezählt und vermessen werden können. Saugende Materialien sind Materialien, die bei 20 °C im Trockenzustand ein Wasseraufnahmevermögen von zumindest einem Fünftel ihres Eigenvolumens aufweisen. Der Trockenzustand eines Materials wird nach dessen Auslagerung für 24 h bei 80 °C im Vakuum einer Wasserstrahlpumpe (p < 30 mbar) erreicht.

Vorliegende Erfindung umfasst daher auch die Verwendung eines erfindungsgemäßen Flüssigklebers zur stoffschlüssigen Verbindung (Verklebung) von Kunststoffen, Metallen oder von offenporigen oder saugenden Materialien, vorzugsweise von Polystyrol, Chloropren, Naturkautschuk, Acrylnitril-Butadien-Styrol, Poly(meth)acrylat, Polyvinylchlorid oder Ethylenvinylacetat oder von Holz, Papier, synthetischer Wolle, Baumwolle, Filz oder Kork, besonders bevorzugt von Holz, Papier, synthetischer Wolle, Baumwolle, Filz oder Kork, wobei die Verklebung vorzugsweise entweder mit gleichartigen Materialien oder mit unterschiedlichen dieser Materialien erfolgt.

Ein weiterer Gegenstand der vorliegenden Erfindung besteht in der Verwendung eines wasserbasierten Flüssigklebers zur stoffschlüssigen Verbindung zweier Substrate, wobei der Flüssigkleber die im Zusammenhang mit dem erfindungsgemäßen Flüssigkleber offenbarten bevorzugten Stärkeether enthält. Demgemäß umfasst die vorliegende Erfindung die Verwendung eines wasserbasierten Flüssigklebers enthaltend zumindest 15 Gew.-% an Stärkeethern ausgewählt aus Hydroxyalkylstärken, Carboxymethylstärken oder Hydroxyalkylcarboxymethylstärken zur stoffschlüssigen Verbindung zweier Substrate, wobei zumindest ein Substrat vorzugsweise ausgewählt ist aus einem Kunststoff, besonders bevorzugt aus Polystyrol, Chloropren, Naturkautschuk, Acrylnitril-Butadien-Styrol, Poly(meth)acrylat, Polyvinylchlorid oder Ethylenvinylacetat, wobei zumindest 50% der organischen Bestandteile des Klebers eine Molmasse oberhalb von 10.000 g/mol aufweisen, wobei der Anteil der organischen Bestandteile mit einer Molmasse oberhalb von 10.000 g/mol eine zahlenmittlere Molmasse von zumindest 40.000 g/mol besitzt. Die Verwendung eines solchen Flüssigklebers zeichnet sich insbesondere dadurch aus, dass unterschiedlichste Substrate und speziell Kunststoffsubstrate gut verklebt werden können.

### Ausführungsbeispiele:

In der Tabelle 1 sind unterschiedliche wässrige Klebstoffrezepturen enthaltend ein aufgeschlossenes Derivat der Kartoffelstärke, Saccharose und eine Säure aufgelistet, für die die Klebeeigenschaften, die Degradation und das Abbindeverhalten bestimmt wurden. Der pH-Wert der Rezepturen der Tabelle 1 lag jeweils bei 4,0 ± 0,2.

In den Rezepturen E1 und E2 der Tabelle 1 waren unterschiedlich aufgeschlossene und chemisch modifizierte Kartoffelstärken S1 und S2 enthalten. Bei dem Stärkederivat der E1 handelte es sich um alkalisch aufgeschlossene und propoxylierte Kartoffelstärke. Demgegenüber war die Kartoffelstärke S2 enzymatisch aufgeschlossen und lag verhältnismäßig stärker abgebaut vor als das Stärkederivat S1.

So besaßen 98 % der polymeren Bestandteile der Rezeptur E1 bestimmt als Flächenprozent der dwt%/dLogM - Verteilungskurve eine Molmasse oberhalb von 10.000 g/mol und 91 % der polymeren Bestandteile der Rezeptur E1 bestimmt als Flächenprozent der dwt%/dLogM - Verteilungskurve eine Molmasse oberhalb von 50.000 g/mol, wobei für die Anteile oberhalb von 10.000 g/mol eine zahlenmittlere Molmasse der polymeren Bestandteile der Rezeptur E1 von 179000 g/mol vorlag. Demgegenüber wiesen 90 % der polymeren Bestandteile der Rezeptur E2 bestimmt als Flächenprozent der dwt%/dLogM - Verteilungskurve eine Molmasse oberhalb von 10.000 g/mol und 42 % der polymeren Bestandteile der Rezeptur E2 bestimmt als Flächenprozent der dwt%/dLogM - Verteilungskurve eine Molmasse oberhalb von 50.000 g/mol auf, wobei für die Anteile oberhalb von 10.000 g/mol eine zahlenmittlere Molmasse der polymeren Bestandteile der Rezeptur E2 von 36600 g/mol vorlag.

Die Molmassen und Molmassenanteile der Rezepturen E1 und E2 wurden anhand von mittels Gelpermeationschromatographie (GPC) bestimmter Molmassenverteilungskurven berechnet. Die Verteilungskurven wurden zunächst gegen Pullulan-Standards auf Molekulargewichte kalibriert. Zur Kalkulation wurde jeweils eine Kalibrierkurve erstellt, die mit einem Polynom der 4. Ordnung angefittet wurde. Die erstellte Kalibrierkurve für Pullulane hatte mehr als 6 Kalibrierpunke auf Basis von Pullulanen mit Molmassen im Peakmaximum im Bereich von 9600 - 708000g/mol und Polydispersitäten von jeweils weniger als 1,27. Die Rezepturen E1 und E2 wurden sodann auf das Säulenmaterial gegeben und mit einer wässrigen Lösung zusammengesetzt aus 0,2 M Natriumchlorid, 0,02 M Natronlauge und 1 ml Ammoniak pro Liter bei einem Eluat-Durchfluß von 1,0 ml/min eluiert. Als Säulensatz wurden drei in Reihe geschaltete Säulen verwendet (Fa. Toso Haas: TSK-Gel G6000 PWXL, TSK Gel G5000 PWXL und TSK Gel G 1000 PW). Die chromatographische Trennung erfolgte bei 20 °C. Die Verteilungskurve wurde sodann mittels eines konzentrationsabhängigen RI-Detektors (Fa. Waters) aufgenommen, der kontinuierlich den Brechungsindex im Eluat bei einer Temperatur von 35 °C bestimmt.

Aus den Beispielen geht nun hervor, dass für den Alltagsbrauch durchweg sehr gute Klebeeigenschaften für die erfindungsgemäßen Rezepturen enthaltend die Kartoffelstärke S1 vorliegen, wohingegen bei der stoffschlüssigen Verbindung der verschiedenen getesteten Substrate mit Hilfe der Rezeptur E2 enthaltend die stark abgebaute Kartoffelstärke S2 für die meisten Substratkombinationen deutlich reduzierte Kohäsionswerte registriert wurden.

Hinsichtlich der in den Rezepturen verwendeten Säuren kann zunächst festgehalten werden, dass in den nicht erfindungsgemäßen Rezepturen C1 und C2 enthaltend die starke Säure Salzsäure bzw. die mittelstarke Säure Phosphorsäure nach kurzer Zeit eine Degradation der enthaltenden Stärkederivate eintritt, die sich visuell durch die Braunfärbung der Rezeptur zu erkennen gibt und zudem zu einer im Vergleich zur Rezeptur E1 um den Faktor 5-8 reduzierten dynamischen Viskosität führt. Diese Rezepturen eignen sich aufgrund des fortschreitenden Abbaus der enthaltenden Stärkederivate nicht für den kommerziellen Gebrauch.
Im Gegensatz dazu sind die erfindungsgemäßen Rezepturen (E1, E3 und E4) enthaltend die schwachen Säuren über einen langen Zeitraum stabil. Eine Degradation erkennbar an einer Braunfärbung dieser Rezepturen kann visuell nicht festgestellt werden. Allerdings zeigt sich, dass die Rezepturen E3 und E4 enthaltend Ascorbinsäure bzw. Milchsäure beim Abbinden über einen langen Zeitraum fließfähig bleiben und im abgebundenen Zustand dann kristalline Bereiche ausbilden können. Die über einen längeren Zeitraum gegebene Fließfähigkeit dieser Rezepturen kann beim stoffschlüssigen Verbinden zu einer relativen Lageänderung der beiden zu verbindenden Substrate führen, was nachteilig sein kann. Zusätzlich ist die Ausbildung kristalliner Bereiche gegebenenfalls nachteilig für eine dauerhaft gute Verklebung. Die im Vergleich besten Klebeeigenschaften und Stabilität besitzt damit die Rezeptur E1 auf Basis des Stärkederivates S1 enthaltend zusätzlich Zitronensäure.

| Tab.1 Flüssige, wasserbasierte Klebstoffrezepturen enthaltend Kartoffelstärke und Saccharose | | | | | | | |
|---|---|---|---|---|---|---|---|
| | | | | | | | |
| | | E1 | E2 | E3 | E4 | C1 | C2 |
| Stärkederivat / Gew.-% | | 27 (S1) | 27 (S2) | 27 (S1) | 27 (S1) | 27 (S1) | 27 (S1) |
| Saccharose / Gew.-% | | 20,0 | 20,0 | 20,0 | 20,0 | 20,0 | 20,0 |
| Zitronensäure / Gew.-% | | 4,0 | 4,0 | - | - | - | - |
| Ascorbinsäure / Gew.-% | | - | - | 11,0 | - | - | - |
| Milchsäure / Gew.-% | | - | - | - | 6,3 | - | - |
| Salzsäure / Gew.-% | | - | - | - | - | 1,7 | |
| Phosphorsäure / Gew.-% | | - | - | - | - | - | 1,5 |
| Wasser / Gew.-% | | 49 | 49 | 42 | 46,7 | 51,3 | 51,5 |
| | | | | | | | |
| Kalter Fluss ¹ | | nein | nein | wenig | wenig | - | - |
| Kristallisation ² | | nein | nein | wenig | wenig | nein | nein |
| Braunfärbung ³ | | nein | nein | nein | nein | stark | erkennbar |
| **Klebekraftpunkte ⁴ Σ** | | **18,5** | **8,4** | **19,6** | **18,0** | **n.d.** | **n.d.** |
| BM /BM⁵ | | 4,7 | 2,3 | 3,7 | 5,0 | n.d. | n.d. |
| BSP /BSP ⁵ | | 5,6 | 2,4 | 6,9 | 5,6 | n.d. | n.d. |
| BSP /PS5 ⁵ | | 3,1 | 0,0 | 3,2 | 1,5 | n.d. | n.d. |
| BSP /ABS ⁵ | | 1,4 | 0,8 | 1,7 | 1,7 | n.d. | n.d. |
| BSP / PVC⁵ | | 1,1 | 1,0 | 0,9 | 1,0 | n.d. | n.d. |
| BSP /PMMA ⁵ | | 0,9 | 0,2 | 0,9 | 1,2 | n.d. | n.d. |
| BSP /Alu ⁵ | | 1,7 | 1,1 | 2,3 | 2,0 | n.d. | n.d. |
| S1: | propoxylierte alkalisch aufgeschlossene Kartoffelstärke | | | | | | |
| S2: | enzymatisch abbgebaute Kartoffelstärke | | | | | | |
| ¹: | Eigenschaft eines 1 mm dicken Films der Klebstoffrezeptur nach 72h an Luft auf Glas bei 45° Neigung der Substratoberfläche fließfähig zu sein; nein: kein Fluss nach 4h; wenig: Fluss nach 2h; ja: Fluss innerhalb von 2h | | | | | | |
| ²: | Eigenschaft eines 1 mm dicken Films der Klebstoffrezeptur nach 7d an Luft bei RT auf Glas zu kristallisieren; nein: keine Kristallisation erkennbar; wenig: Eintrübung erkennbar; ja: Kristallisationsbereiche deutlich erkennbar (jeweils mit dem bloßem Auge) | | | | | | |
| ³ | visuelle Beurteilung 1h nach Formulierung der Rezeptur | | | | | | |
| ⁴: | Summe der Zugscherkräfte in N/mm² | | | | | | |
| ⁵: | Zugscherkräfte in N/mm² beim Abriss oder Substratriss der miteinander verklebten Substrate mit einer Dicke von 2mm nach einer Trocknung bei 20°C und 60 % relative Luftfeuchte für 5 Tage; Verklebung erfolgt dabei mit einer Überlappung von 20 x 20 mm | | | | | | |
| BM: Buche massiv; BSP: Buche Sperrholz; PS: Polystyrol; ABS: Acrylbutadienstyrol; PVC: Polyvinylchlorid; PMMA: Polymethacrylat; Alu: Aluminium | | | | | | | |

## Patentansprüche

1. Wasserbasierter Flüssigkleber mit einem pH-Wert oberhalb von 3 und unterhalb von 6 enthaltend
a) zumindest 15 Gew.-% an ein oder mehreren Stärkederivaten ausgewählt aus Stärkeethern;
b) ein oder mehrere Mono-, Di- oder Trisaccharide oder Zuckeralkohole mit einem Gesamtanteil von nicht mehr als 30 Gew.-%, und
c) zumindest eine Säure mit einem pK_{S1}-Wert für den ersten Deprotonierungsschritt im Bereich von 2,5 bis 6,0, die ausgewählt ist aus mehrwertigen organischen Carbonsäuren.

2. Kleber gemäß Anspruch 1, **dadurch gekennzeichnet, dass** die Stärkederivate der Komponente a) ausgewählt sind aus Hydroxyalkylstärken, Carboxymethylstärken oder Hydroxyalkylcarboxymethylstärken.

3. Kleber gemäß einem oder beiden der vorherigen Ansprüche, **dadurch gekennzeichnet, dass** die Komponente b) ausgewählt ist aus Disacchariden, vorzugsweise aus Saccharose, Lactose, Maltose, Cellobiose, Melibiose, Gentiobiose oder Trehalose.

4. Kleber gemäß einem oder mehreren der vorherigen Ansprüche, **dadurch gekennzeichnet, dass** der Anteil der Stärkederivate gemäß Komponente a) im Kleber nicht mehr als 50 Gew.-%, vorzugsweise nicht mehr als 40 Gew.-% beträgt.

5. Kleber gemäß einem oder mehreren der vorherigen Ansprüche, **dadurch gekennzeichnet, dass** der Anteil der Mono-, Di- oder Trisaccharide und der Zuckeralkohole gemäß Komponente b) im Kleber zumindest 5 Gew.-%, vorzugsweise zumindest 10 Gew.-%, jedoch vorzugsweise nicht mehr als 25 Gew.-% beträgt.

6. Kleber gemäß einem oder mehreren der vorherigen Ansprüche, **dadurch gekennzeichnet, dass** der Kleber als Komponente c) zumindest eine mehrwertige organische Carbonsäure enthält.

7. Kleber gemäß Anspruch 6, **dadurch gekennzeichnet, dass** die Komponente c) ausgewählt ist aus Zuckersäuren, Glutarsäure, Weinsäure oder Zitronensäure, vorzugsweise aus Zitronensäure.

8. Kleber gemäß einem der Ansprüche 6 oder 7, **dadurch gekennzeichnet, dass** der Anteil mehrwertiger organischer Carbonsäuren gemäß Komponente c) sowie deren wasserlöslichen Salzen im Kleber zumindest 1 Gew.-%, vorzugsweise zumindest 2 Gew.-%, jedoch vorzugsweise nicht mehr als 10 Gew.-%, besonders bevorzugt nicht mehr als 6 Gew.-% beträgt.

9. Kleber gemäß einem oder mehreren der vorherigen Ansprüche, **dadurch gekennzeichnet, dass** der Anteil an Wasser im Kleber zumindest zumindest 15 Gew.%, vorzugsweise zumindest 30 Gew.-% beträgt.

10. Kleber gemäß einem oder mehreren der vorherigen Ansprüche, **dadurch gekennzeichnet, dass** der Anteil an organischen Lösemitteln mit einem Siedepunkt von weniger als 150 °C bei Standardbedingungen im Kleber nicht mehr als 10 Gew.-%, vorzugsweise nicht mehr als 5 Gew.-%, besonders bevorzugt nicht mehr als 1 Gew.-% beträgt.

11. Kleber gemäß einem oder mehreren der vorherigen Ansprüche, **dadurch gekennzeichnet, dass** der pH-Wert des Klebers unterhalb von 5, bevorzugt unterhalb von 4,5, jedoch vorzugsweise nicht unterhalb von 3,5 liegt.

12. Kleber gemäß einem oder mehreren der vorherigen Ansprüche, **dadurch gekennzeichnet, dass** zumindest 50% der organischen Bestandteile des Klebers eine Molmasse oberhalb von 10.000 g/mol, vorzugsweise oberhalb von 50.000 g/mol aufweist, wobei der Anteil der organischen Bestandteile mit einer Molmasse oberhalb von 10.000 g/mol vorzugsweise eine zahlenmittlere Molmasse von zumindest 40.000 g/mol, besonders bevorzugt von zumindest 60.000 g/mol, jedoch vorzugsweise von nicht mehr als 300.000 g/mol besitzt.

13. Kleber gemäß einem oder mehreren der vorherigen Ansprüche 8 bis 12 zusammengesetzt aus
a) 15-50 Gew.%, vorzugsweise 20-40 Gew.-%, an Stärkederivaten;
b) 5-30 Gew.-%, vorzugsweise 10-25 Gew.-%, an Mono-, Di- und Trisacchariden sowie Zuckeralkoholen;
c) 1-10 Gew.-%, vorzugsweise 2-6 Gew.-%, an mehrwertigen organischen Carbonsäuren sowie deren wasserlöslichen Salzen;
d) zumindest 15 Gew.%, vorzugsweise zumindest 30 Gew.-% an Wasser
e) nicht mehr als 10 Gew.-%, vorzugsweise nicht mehr als 5 Gew.-%, besonders bevorzugt nicht mehr als 2 Gew.-% an Hilfsstoffen ausgewählt aus Konservierungsmitteln, Verdickungsmitteln, Duftstoffen, Füllstoffen und/oder Pigmenten;
f) nicht mehr als 5 Gew.-%, vorzugsweise nicht mehr als 1 Gew.-%, an organischen Lösemitteln mit einem Siedepunkt von weniger als 150 °C bei Standardbedingungen,
g) nicht mehr als 10 Gew.-%, vorzugsweise nicht mehr als 5 Gew.-%, besonders bevorzugt nicht mehr als 1 Gew.-% an anderen Substanzen als den unter a)-f) genannten.

14. Verwendung eines Flüssigklebers gemäß einem oder mehreren der vorherigen Ansprüche zur stoffschlüssigen Verbindung von Kunststoffen, Metallen oder von offenporigen oder saugenden Materialien, vorzugsweise von Polystyrol, Chloropren, Naturkautschuk, Acrylnitril-Butadien-Styrol, Poly(meth)acrylat, Polyvinylchlorid oder Ethylenvinylacetat oder von Holz, Papier, synthetischer Wolle, Baumwolle, Filz oder Kork, besonders bevorzugt von Holz, Papier, synthetischer Wolle, Baumwolle, Filz oder Kork.

15. Verwendung gemäß Anspruch 14 zur stoffschlüssigen Verbindung zweier Substrate, bei der zumindest ein Substrat ausgewählt ist aus einem Kunststoff, vorzugsweise aus Polystyrol, Chloropren, Naturkautschuk, Acrylnitril-Butadien-Styrol, Poly(meth)acrylat, Polyvinylchlorid oder Ethylenvinylacetat" **dadurch gekennzeichnet, dass** der wasserbasierte Flüssigkleber Stärkeethern ausgewählt aus Hydroxyalkylstärken, Carboxymethylstärken oder Hydroxyalkylcarboxymethylstärken enthält und zumindest 50% der organischen Bestandteile des Klebers eine Molmasse oberhalb von 10.000 g/mol aufweisen, wobei der Anteil der organischen Bestandteile mit einer Molmasse oberhalb von 10.000 g/mol eine zahlenmittlere Molmasse von zumindest 40.000 g/mol besitzt.

## Claims

1. A water-based liquid adhesive having a pH of above 3 and below 6, containing
a) at least 15 wt.% of one or more starch derivatives selected from starch ethers;
b) one or more monosaccharides, disaccharides or trisaccharides or sugar alcohols in a total proportion of no more than 30 wt.%; and
c) at least one acid that has a pK_{S1} value for the first deprotonation step in the range of from 2.5 to 6.0 and is selected from polyvalent organic carboxylic acids.

2. The adhesive according to claim 1, **characterized in that** the starch derivatives of component a) are selected from hydroxyalkyl starches, carboxymethyl starches or hydroxyalkyl carboxymethyl starches.

3. The adhesive according to one or both of the preceding claims, **characterized in that** component b) is selected from disaccharides, preferably from saccharose, lactose, maltose, cellobiose, melibiose, gentiobiose or trehalose.

4. The adhesive according to one or more of the preceding claims, **characterized in that** the proportion of starch derivatives according to component a) in the adhesive is no more than 50 wt.%, preferably no more than 40 wt.%.

5. The adhesive according to one or more of the preceding claims, **characterized in that** the proportion of the monosaccharides, disaccharides or trisaccharides and the sugar alcohols according to component b) in the adhesive is at least 5 wt.%, preferably at least 10 wt.%, but preferably no more than 25 wt.%.

6. The adhesive according to one or more of the preceding claims, **characterized in that** the adhesive contains, as component c), at least one polyvalent organic carboxylic acid.

7. The adhesive according to claim 6, **characterized in that** component c) is selected from saccharic acids, glutaric acid, tartaric acid or citric acid, preferably from citric acid.

8. The adhesive according to one of claims 6 or 7, **characterized in that** the proportion of polyvalent organic carboxylic acids according to component c) and the water-soluble salts thereof in the adhesive is at least 1 wt.%, preferably at least 2 wt.%, but preferably no more than 10 wt.%, particularly preferably no more than 6 wt.%.

9. The adhesive according to one or more of the preceding claims, **characterized in that** the proportion of water in the adhesive is at least 15 wt.%, preferably at least 30 wt.%.

10. The adhesive according to one or more of the preceding claims, **characterized in that** the proportion of organic solvents in the adhesive having a boiling point of less than 150°C in standard conditions is no more than 10 wt.%, preferably no more than 5 wt.%, particularly preferably no more than 1 wt.%.

11. The adhesive according to one or more of the preceding claims, **characterized in that** the pH of the adhesive is below 5, preferably below 4.5, but preferably not above 3.5.

12. The adhesive according to one ore more of the preceding claims, **characterized in that** at least 50% of the organic components of the adhesive have a molar mass of above 10,000 g/mol, preferably above 50,000 g/mol, the proportion of organic components having a molar mass of above 10,000 g/mol preferably having a number-average molar mass of at least 40,000 g/mol, particularly preferably of at least 60,000 g/mol, but preferably of no more than 300,000 g/mol.

13. The adhesive according to one or more of preceding claims, claims 8 to 12, composed of
a) 15-50 wt.%, preferably 20-40 wt.%, starch derivatives;
b) 5-30 wt.%, preferably 10-25 wt.%, monosaccharides, disaccharides and trisaccharides and sugar alcohols;
c) 1-10 wt.%, preferably 2-6 wt.%, polyvalent organic carboxylic acids and the water-soluble salts thereof;
d) at least 15 wt.%, preferably at least 30 wt.%, water;
e) no more than 10 wt.%, preferably no more than 5 wt.%, particularly preferably no more than 2 wt.%, auxiliaries selected from preservatives, thickeners, fragrances, fillers and/or pigments;
f) no more than 5 wt.%, preferably no more than 1 wt.%, organic solvents having a boiling point of less than 150 °C in standard conditions;
g) no more than 10 wt.%, preferably no more than 5 wt.%, particularly preferably no more than 1 wt.%, substances other than those indicated in a)-f).

14. The use of a liquid adhesive according to one or more of the preceding claims for the bonded connection of plastics materials, metals, or open-pore or absorbent materials, preferably polystyrene, chloroprene, natural rubber, acrylonitrile butadiene styrene, poly(meth)acrylate, polyvinyl chloride or ethylene vinyl acetate, or wood, paper, synthetic wool, cotton, felt or cork, particularly preferably wood, paper, synthetic wool, cotton, felt or cork.

15. The use according to claim 14 for the bonded connection of two substrates, in which at least one substrate is selected from a plastics material, preferably from polystyrene, chloroprene, natural rubber, acrylonitrile butadiene styrene, poly(meth)acrylate, polyvinyl chloride, or ethylene vinyl acetate, **characterized in that** the water-based liquid adhesive contains starch ethers selected from hydroxyalkyl starches, carboxymethyl starches or hydroxyalkyl carboxymethyl starches, and at least 50% of the organic components of the adhesive have a molar mass of above 10,000 g/mol, the proportion of the organic components having a molar mass of above 10,000 g/mol having a number-average molar mass of at least 40,000 g/mol.

## Revendications

1. Adhésif liquide à base d'eau de pH supérieur à 3 et inférieur à 6, contenant
a) au moins 15% en poids d'un ou de plusieurs dérivés d'amidon choisi parmi les éthers d'amidon ;
b) un ou plusieurs mono-, di- ou trisaccharides ou des alcools de sucre dans une proportion totale non supérieure à 30% en poids, et
c) au moins un acide ayant une valeur pK_{S1} pour la première étape de déprotonation dans la gamme allant de 2,5 à 6,0, qui est choisi parmi les acides carboxyliques organiques polyvalents.

2. Adhésif selon la revendication 1, **caractérisé en ce que** les dérivés d'amidon du composant a) sont choisis parmi les hydroxyalkylamidons, les carboxyméthylamidon ou les hydroxyalkylcarboxyméthylamidons.

3. Adhésif selon l'une des revendications précédentes ou les deux, **caractérisé en ce que** le composant b) est choisi parmi les disaccharides, de préférence le saccharose, le lactose, le maltose, le cellobiose, le mélibiose, le gentiobiose ou le tréhalose.

4. Adhésif selon une ou plusieurs des revendications précédentes, que la proportion des dérivés d'amidon correspondant au composant a) dans l'adhésif n'est pas supérieure à 50% en poids, de préférence pas supérieure à 40% en poids.

5. Adhésif selon l'une ou plusieurs des revendications précédentes, **caractérisé en ce que** la proportion de mono-, di- ou trisaccharides et d'alcools de sucre correspondant au composant b) dans l'adhésif est d'au moins 5% en poids, de préférence au moins 10% en poids, mais de préférence non supérieure à 25% en poids.

6. Adhésif selon l'une ou plusieurs des revendications précédentes, **caractérisé en ce que** l'adhésif contient comme composant c) au moins un acide carboxylique organique polyvalent.

7. Adhésif selon la revendication 6, **caractérisé en ce que** le composant c) est sélectionné parmi les acides de sucre, l'acide glutarique, l'acide tartrique ou l'acide citrique, de préférence l'acide citrique.

8. Adhésif selon l'une des revendications 6 ou 7, **caractérisé en ce que** la proportion d'acides carboxyliques organiques polyvalents correspondant au composant c) et leurs sels hydrosolubles dans l'adhésif est d'au moins 1% en poids, de préférence d'au moins 2% en poids, mais de préférence non supérieure à 10% en poids, de façon particulièrement préférée non supérieure à 6% en poids.

9. Adhésif selon l'une ou plusieurs des revendications précédentes, **caractérisé en ce que** la proportion d'eau dans l'adhésif est d'au moins 15% en poids, de préférence d'au moins 30% en poids.

10. Adhésif selon l'une ou plusieurs des revendications précédentes, **caractérisé en ce que** la proportion de solvants organiques ayant un point d'ébullition inférieur à 150 °C dans des conditions standard dans l'adhésif n'est pas supérieure à 10% en poids, de préférence pas supérieure à 5% en poids, de manière particulièrement préférée pas supérieure à 1% en poids.

11. Adhésif selon l'une ou plusieurs des revendications précédentes, **caractérisé en ce que** le pH de l'adhésif est inférieur à 5, de préférence inférieur à 4,5, cependant avantageusement non inférieur à 3,5.

12. Adhésif selon l'une ou plusieurs des revendications précédentes, **caractérisé en ce qu'**au moins 50% des constituants organiques de l'adhésif ont une masse molaire supérieure à 10000 g/mol, de préférence supérieure à 50000 g/mol ; la proportion des constituants organiques ayant une masse molaire supérieure à 10000 g/mol ont de préférence une masse molaire moyenne en nombre d'au moins 40000 g/mol, de façon particulièrement préférée d'au moins 60000 g/mol, cependant avantageusement non supérieure à 300000 g/mol.

13. Adhésif selon l'une ou plusieurs des revendications 8 à 12 précédentes, composé
a) de 15 à 50% en poids, de préférence de 20 à 40% en poids, de dérivés d'amidon ;
b) de 5 à 30% en poids, de préférence de 10 à 25% en poids, de mono-, di- et trisaccharides et d'alcools de sucre ;
c) de 1 à 10% en poids, de préférence de 2 à 6% en poids, d'acides carboxyliques organiques polyvalents et leurs sels hydrosolubles ;
d) d'au moins 15% en poids, de préférence d'au moins 30% en poids, d'eau
e) de pas plus de 10% en poids, de préférence de pas plus de 5% en poids, de façon particulièrement préférée de pas plus de 2% en poids, d'adjuvants choisis parmi les agents de conservation, les agents d'épaississement, les parfums, les charges et/ou les pigments ;
f) de pas plus de 5% en poids, de préférence de pas plus de 1% en poids, de solvants organiques ayant un point d'ébullition inférieur à 150 °C dans des conditions standard,
g) de pas plus de 10% en poids, de préférence de pas plus de 5% en poids, de façon particulièrement préférée pas plus de 1% en poids, de substances autres que celles mentionnées en a) à f).

14. Utilisation d'un adhésif liquide selon l'une ou plusieurs des revendications précédentes pour relier par liaison de matière des matières synthétiques, des métaux ou des matières à pores ouverts ou absorbantes, de préférence du polystyrène, du chloroprène, du caoutchouc naturel, de l'acrylonitrile-butadiène-styrène, du poly(méth)acrylate, du chlorure de polyvinyle ou de l'acétate d'éthylène-vinyle ou du bois, du papier, de la laine synthétique, du coton, du feutre ou du liège, de façon particulièrement préférée du bois, du papier, de la laine synthétique, du coton, du feutre ou du liège.

15. Utilisation selon la revendication 14 pour relier par une liaison de matière deux substrats, dans laquelle au moins un substrat est choisi parmi une matière synthétique, de préférence du polystyrène, du chloroprène, du caoutchouc naturel, de l'acrylonitrile-butadiène-styrène, du poly(méth)acrylate, du chlorure de polyvinyle ou de l'acétate de vinyle, **caractérisé en ce que** l'adhésif liquide à base d'eau contient des éthers d'amidon choisis parmi les hydroxyalkylamidons, les carboxyméthylamidon ou les hydroxyalkylcarboxyméthylamidons et au moins 50% des constituants organiques de l'adhésif ont une masse molaire supérieure à 10000 g/mol ; la proportion des constituants organiques ayant une masse molaire supérieure à 10000 g/mol ont de préférence une masse molaire moyenne en nombre d'au moins 40000 g/mol.
